# EUROPEAN PATENT APPLICATION

(11) **EP 4 800 768 A1**
(43) Date of publication of application: **02.09.2026**
(21) Application number: 24882912.9
(22) Date of filing: 25.10.2024
(51) Int. Cl.: H01M 4/525, H01M 4/505, C01G 53/00, H01M 4/02

(54) **CATHODE ACTIVE MATERIAL FOR LITHIUM SECONDARY BATTERY AND MANUFACTURING METHOD THEREFOR**

(30) Priority: 27.10.2023 KR 20230145605
(71) Applicant: Posco Future M Co., Ltd., Pohang-si, Gyeongsangbuk-do 37918 (KR)
(72) Inventor: PARK, Hyewon, Pohang-si, Gyeongsangbuk-do 37918 (KR); AHN, Jungyoung, Pohang-si, Gyeongsangbuk-do 37918 (KR); SEO, Ju Won, Pohang-si, Gyeongsangbuk-do 37918 (KR); KIM, Hyunjin, Pohang-si, Gyeongsangbuk-do 37918 (KR); LEE, Subin, Pohang-si, Gyeongsangbuk-do 37918 (KR); KIM, Deuksu, Pohang-si, Gyeongsangbuk-do 37918 (KR)
(74) Representative: Pfenning, Meinig & Partner mbB
(86) International application number: PCT/KR2024/016449
(87) International publication number: WO 2025/089886

(57) **Abstract**

The present invention relates to a positive electrode active material for a lithium secondary battery and a method for manufacturing the positive electrode active material, wherein the positive electrode active material comprises lithium metal oxide particles including lithium, nickel, cobalt, and manganese, and satisfies the following Equation 1: $A - B \leq 1.30$ (In Equation 1, A is a sum of fine powder values of 1 µm or less after pressing when 3 g of a sample of the positive electrode active material is introduced into a 1.3 cm diameter mold and pressed at 9 tons, and B is a sum of fine powder values of 1 µm or less before pressing.).

## Description

### [TECHNICAL FIELD]

The present invention relates to a lithium secondary battery, and more particularly, to a positive electrode active material for a lithium secondary battery and a method for manufacturing the same.

### [BACKGROUND ART]

As technology development and demand for mobile devices increase, the demand for secondary batteries as an energy source is rapidly increasing. Among secondary batteries, lithium secondary batteries exhibiting high energy density and operating potential, long cycle life, and low self-discharge rate have been commercialized and widely used.

In addition, as interest in environmental issues grows, there is an increasing interest in electric vehicles and hybrid electric vehicles that can replace vehicles using fossil fuels, such as gasoline and diesel vehicles, which are one of the main causes of air pollution. Research on using lithium secondary batteries as a power source for the electric vehicles and the hybrid electric vehicles is actively underway.

A lithium secondary battery generally comprises a positive electrode including a positive electrode material, a negative electrode including a negative electrode material, a separator, and an electrolyte, and charging and discharging are performed by intercalation-deintercalation of lithium ions. The lithium secondary battery is applied to various fields because it has advantages such as high energy density, large electromotive force, and high capacity.

Specifically, as an effort to improve the performance of a positive electrode active material, a technology using a high-nickel NCM (nickel-cobalt-manganese) positive electrode material having a high Ni content has been proposed. However, conventional high-nickel NCM positive electrode materials are in the form of secondary particles in which primary particles are aggregated. Due to the large specific surface area of the powder, the contact area with the electrolyte is somewhat wide, which increases gas generation. Furthermore, the strength of the secondary particles is weak, leading to a problem where the secondary particles are broken into the form of primary particles during the rolling process of the electrode, thereby deteriorating cycle life characteristics.

Accordingly, a single-particle shaped positive electrode material has been devised to suppress the problem of cycle life deterioration in high-nickel NCM positive electrode materials by increasing the size of primary particles to reduce the specific surface area and increasing the strength of the particles.

However, when a single-particle shaped positive electrode material is manufactured using a conventional method, the pulverization process is not easy, and thus the form of secondary particles in which primary particles are clumped remains, which causes a problem of high residual lithium.

Since such residual lithium causes inferior electrochemical characteristics of a battery, it is necessary to remove residual lithium through an additional heat treatment.

Therefore, there is a demand for a method for manufacturing a positive electrode active material for a lithium secondary battery that can manufacture a single particle through a simple process while suppressing the generation of residual lithium.

### [DETAILED DESCRIPTION OF THE INVENTION]

### [TECHNICAL PROBLEM]

An object of an embodiment of the present invention is to provide a positive electrode active material for a lithium secondary battery that has a low residual lithium content and thus can impart excellent electrochemical characteristics when applied to a lithium secondary battery.

Another object of an embodiment of the present invention is to provide a method for manufacturing a positive electrode active material for a lithium secondary battery that manufactures a single particle through a simple process and has the aforementioned advantages.

### [TECHNICAL SOLUTION]

According to an embodiment of the present invention, a positive electrode active material for a lithium secondary battery comprises lithium metal oxide particles including lithium, nickel, cobalt, and manganese, and may satisfy the following Equation 1: $A - B \leq 1.30$ (In Equation 1, A is a sum of fine powder values of 1 µm or less after pressing when 3 g of a sample of the positive electrode active material is introduced into a 1.3 cm diameter mold and pressed at 9 tons, and B is a sum of fine powder values of 1 µm or less before pressing.)

In one embodiment, the B may be 1.20 to 2.50. In one embodiment, the A may be 0.5 to 0.9. In one embodiment, a content of residual lithium may be 0.50 wt% or less based on 100 wt% of a total weight of the positive electrode active material.

In one embodiment, the residual lithium includes LiOH, and a content of the LiOH may be 0.4 wt% or less based on 100 wt% of a total weight of the positive electrode active material. In one embodiment, the positive electrode active material may have an average particle size (D₅₀) of 3.0 to 5.0 µm. In one embodiment, the positive electrode active material may have a specific surface area of 0.40 to 0.55 m²/g.

In one embodiment, the positive electrode active material may be a single particle. In one embodiment, a content of the nickel may be 0.85 mol or more based on 1 mol of a total of the nickel, manganese, and doping elements.

According to another embodiment of the present invention, a method for manufacturing a positive electrode active material for a lithium secondary battery comprises: forming a mixture including a metal hydroxide precursor, a doping element, and a lithium raw material; performing a first calcination of the mixture at 830 to 860°C to obtain a calcinated product; pulverizing the calcinated product to obtain a metal oxide; and performing a second calcination of the metal oxide at 750 to 830°C to obtain lithium metal oxide particles in a single particle form, wherein in the step of performing the first calcination to obtain the calcinated product, the calcinated product satisfies the following Equation 2: $0.85 \leq C - D \leq 5.00$ (In Equation 2, C is a sum of fine powder values of 1 µm or less after pressing when 3 g of a sample of the first calcinated product is introduced into a 1.3 cm diameter mold and pressed at 9 tons, and B is a sum of fine powder values of 1 µm or less before pressing.)

In one embodiment, the metal hydroxide precursor may be a plate-shaped precursor. In one embodiment, the calcinated product may be pulverized using a jet mill at a pressure of 2.0 to 5.0 bar. In one embodiment, the first calcination may be performed at 830 to 870°C. In one embodiment, a Li/Ni cation mixing degree of the calcinated product obtained in the step of performing the first calcination of the mixture at 830 to 870°C to obtain the calcinated product may satisfy 1.3 to 2.1%.

### [ADVANTAGEOUS EFFECTS]

A positive electrode active material for a lithium secondary battery according to an embodiment of the present invention can provide a positive electrode active material for a lithium secondary battery that can impart excellent electrochemical characteristics when applied to a lithium secondary battery because it has a low residual lithium content by controlling an increase in fine powder content when pressed at a predetermined pressure.

A method for manufacturing a positive electrode active material for a lithium secondary battery according to another embodiment of the present invention can provide a method for manufacturing a positive electrode active material for a lithium secondary battery having the aforementioned advantages by performing a first calcination step, a pulverization step, and a second calcination step, and controlling an increase in fine powder content when the calcinated product is pressed at a predetermined pressure in the first calcination step.

### [BRIEF DESCRIPTION OF DRAWINGS]

FIGS. 1 to 6 are SEM images of calcinated products manufactured according to Preparation Examples.
FIGS. 7 and 8 are SEM images of positive electrode active materials for a lithium secondary battery manufactured according to Examples and Comparative Examples.
FIGS. 9a and 9b are graphs showing grain sizes of positive electrode active materials for a lithium secondary battery manufactured according to Examples, and FIGS. 9c and 9d show grain sizes of positive electrode active materials for a lithium secondary battery manufactured according to Comparative Examples.

### [DETAILED DESCRIPTION OF THE EMBODIMENTS]

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

The technical terms used herein are only for referring to specific embodiments and are not intended to limit the present invention. Singular forms used herein include plural forms as well, unless the phrases clearly indicate the opposite meaning. The meaning of "comprising" or "including" used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part, or another part may be accompanied therebetween. In contrast, when a part is referred to as being "directly on" another part, no other part is interposed therebetween.

Unless defined otherwise, all terms including technical terms and scientific terms used herein have the same meaning as commonly understood by one of ordinary skill in the art to which the present invention pertains. Terms defined in commonly used dictionaries are further interpreted as having a meaning consistent with the related technical literature and the currently disclosed content, and are not interpreted in an ideal or very formal sense unless defined.

Hereinafter, embodiments of the present invention will be described in detail. However, these are presented as examples, and the present invention is not limited thereto, but is only defined by the scope of the claims to be described later.

A positive electrode active material for a lithium secondary battery according to an embodiment of the present invention may comprise lithium metal oxide particles. Specifically, the positive electrode active material for a lithium secondary battery may include metal oxides such as lithium, nickel, cobalt, and manganese.

In one embodiment, the positive electrode active material for a lithium secondary battery may have a layered crystal structure. Specifically, it may include a lithium layer in the crystal structure of the lithium metal oxide.

In one embodiment, a cation mixing ratio of the nickel cations in the lithium layer within the crystal structure of the lithium metal oxide may be 1.0 to 1.8%, and specifically, 1.2 to 1.6%.

Since the nickel cation mixing ratio in the lithium layer of the positive electrode active material for a lithium secondary battery satisfies the aforementioned range, a phenomenon in which the lithium layer collapses and cycle life characteristics decrease can be suppressed. In addition, it is possible to suppress a phenomenon in which resistance characteristics and output characteristics are deteriorated due to a decrease in lithium ion mobility caused by an increase in irreversible sites in a bulk portion of the positive electrode active material for a lithium secondary battery.

In one embodiment, the positive electrode active material for a lithium secondary battery may be in a single particle form. The term "single particle" is used to distinguish from positive electrode active material particles in a secondary particle form formed by aggregation of tens to hundreds of primary particles commonly used in the past, and may be a concept including a single particle composed of one primary particle and an aggregate particle of 30 or fewer primary particles.

The primary particle refers to a minimum particle unit distinguished as one lump when a cross-section of the positive electrode active material is observed through a scanning electron microscope (SEM), and may be composed of one grain or a plurality of grains. Here, the grain refers to a region distinguished in a form in which atoms within a primary particle form a lattice structure in a certain direction. In addition, the secondary particle refers to an aggregate, i.e., a secondary structure, in which tens to hundreds of primary particles are aggregated by physical or chemical bonding between primary particles even without an intentional aggregation or assembly process for the primary particles.

In one embodiment, the positive electrode active material for a lithium secondary battery may include a doping element. The doping element may include, for example, at least one of zirconium (Zr) and yttrium (Y).

When the zirconium is contained as the doping element, it suppresses the diffusion of Ni²⁺ into Li⁺ sites, preventing transformation from a layered structure to a spinel structure, thereby lowering the cation mixing degree and improving structural stability. In addition, there is an advantage of increasing charge/discharge capacity and thermal stability by reducing the concentration of Ni³⁺ ions.

A doping amount of the zirconium in the lithium metal oxide particles may be 1000 to 4000 ppm, preferably 1500 to 3500 ppm, and more preferably 2000 to 3000 ppm.

When the zirconium is included within the above range, it can stabilize the layered structure by alleviating the contraction of the lithium ion path during the charging and discharging process of a battery. Accordingly, the cation mixing ratio can be lowered, and as a result, resistance characteristics and cycle life characteristics can be improved.

When the yttrium is contained as the doping element, it can stabilize the structure during the discharging process of a lithium secondary battery to alleviate voltage hysteresis, and as a result, there is an advantage of improving cycle life characteristics.

A doping amount of the yttrium in the lithium metal oxide particles may be 500 to 2000 ppm, preferably 700 to 1800 ppm, and more preferably 1000 to 1500 ppm. When the yttrium is included within the above range, grain growth can be promoted to efficiently increase the grain size within a single particle and the average particle size of the single particle.

In one embodiment, the doping element may further include at least one selected from the group consisting of B, Al, Mg, Ti, Nb, W, Sc, Si, V, Fe, Mo, Ce, Hf, Ta, La, and Sr, but is not limited thereto.

In one embodiment, the positive electrode active material for a lithium secondary battery may satisfy the following Chemical Formula 1:

[Chemical Formula 1] Liₐ[NiₓCo_{γ}Mn_{z}M_{w}]O₂

In Chemical Formula 1, M is at least one of Zr and Y, 0.8 ≤ a ≤ 1.3, 0.8 ≤ x < 1, 0 < y < 0.08, 0 < z < 0.08, 0 < w ≤ 0.04, and x+y+z+w=1. Specifically, 0.001 ≤ w ≤ 0.01, and more specifically, 0.002 ≤ w ≤ 0.008.

In one embodiment, a content of the nickel may be 0.85 mol or more based on 1 mol of a total of the nickel, cobalt, manganese, and doping elements. Specifically, the content of the nickel may be 0.90 mol or more.

The positive electrode active material for a lithium secondary battery according to the present invention can implement a high-nickel positive electrode active material by including the aforementioned nickel content. Specifically, the positive electrode active material for a lithium secondary battery may be a high-nickel positive electrode active material containing nickel and manganese.

In one embodiment, the positive electrode active material for a lithium secondary battery may have an average particle size (D₅₀) of 3.0 to 5.0 µm. Specifically, it may be 3.5 to 4.5 µm. The average particle size (D₅₀) refers to a particle size corresponding to 50% of a volume cumulative amount in a particle size distribution curve of particles. The average particle size (D₅₀) may be measured using, for example, a laser diffraction method.

In one embodiment, the positive electrode active material for a lithium secondary battery may have a specific surface area of 0.40 to 0.55 m²/g. Specifically, it may be 0.42 to 0.53 m²/g. The specific surface area is a BET specific surface area and can be measured using a BET method (Surface area and Porosity analyzer) (Micromeritics, ASAP2020).

Since the specific surface area satisfies the aforementioned range, a problem of cycle life deterioration as the particle strength of the positive electrode active material for a lithium secondary battery increases can be suppressed. If the specific surface area is outside the aforementioned range, there is a problem that the electrochemical characteristics of the positive electrode active material are deteriorated.

In one embodiment, the positive electrode active material for a lithium secondary battery may have a residual lithium amount of 0.80 wt% or less based on 100 wt% of a total weight of the positive electrode active material. Specifically, the residual lithium amount may be 0.50 wt% or less, more specifically 0.45 wt% or less, and even more specifically 0.4 wt% or less. The residual lithium amount can be measured using an automatic titrator.

Since the residual lithium amount satisfies the aforementioned range, a positive electrode active material for a lithium secondary battery having excellent electrochemical characteristics can be provided. If the residual lithium is outside the aforementioned range, there is a problem that the electrochemical characteristics of the positive electrode active material for a lithium secondary battery become inferior.

In one embodiment, the positive electrode active material for a lithium secondary battery may satisfy the following Equation 1: $A - B \leq 1.30$ (In Equation 1, A is a sum of fine powder values of 1 µm or less after pressing when 3 g of a sample of the positive electrode active material is introduced into a 1.3 cm diameter mold and pressed at 9 tons, and B is a sum of fine powder values of 1 µm or less before pressing.)

Equation 1 may be an index indicating an increase in fine powder of the active material. Equation 1 may be 0.80 to 1.30, specifically 0.85 to 1.20, more specifically 0.90 to 1.10, and even more specifically 0.95 to 1.05. By satisfying Equation 1, there is an advantage that the single-particle degree of the positive electrode active material for a lithium secondary battery is improved. If Equation 1 is outside the aforementioned range, there is a problem that the single-particle degree of the active material drops and fine powder increases.

In one embodiment, in Equation 1, a value of A, which is the sum of fine powder values of 1 µm or less after pressing when 3 g of a sample of the positive electrode active material is introduced into a 1.3 cm diameter mold and pressed at 9 tons, may be 1.20 to 2.50. Specifically, the A value may be 1.40 to 1.90, and more specifically 1.50 to 1.80.

In one embodiment, in Equation 1, a value of B, which is the sum of fine powder values of 1 µm or less before pressing when 3 g of a sample of the positive electrode active material is introduced into a 1.3 cm diameter mold and pressed at 9 tons, may be 0.5 to 0.9. Specifically, the B value may be 0.6 to 0.8, and more specifically 0.65 to 0.75.

The A value and B value may be characteristics of a positive electrode active material manufactured by performing a first calcination at a temperature in a range of 840 to 860°C, followed by a pulverization process and a second calcination, in the method for manufacturing a positive electrode active material for a lithium secondary battery. If the A value and B value are outside the aforementioned ranges, there is a problem that the single-particle degree of the active material drops and fine powder increases.

In one embodiment, the positive electrode active material for a lithium secondary battery may include LiOH and Li₂CO₃. Accordingly, the positive electrode active material for a lithium secondary battery may include a predetermined content of residual lithium.

According to another embodiment of the present invention, a method for manufacturing a positive electrode active material for a lithium secondary battery may comprise: forming a mixture including a metal hydroxide precursor and a lithium raw material; performing a first calcination of the mixture to obtain a calcinated product; pulverizing the calcinated product to obtain a metal oxide; and performing a second calcination of the metal oxide to obtain lithium metal oxide particles. The method for manufacturing a positive electrode active material for a lithium secondary battery of the present invention can simplify the process compared to conventional single-crystal manufacturing methods and has the advantage of not requiring an additional heat treatment process due to low residual lithium, by pulverizing secondary particles in which primary particles are clumped after the first calcination and then growing single crystals in the subsequent second calcination.

The step of forming a mixture including a metal hydroxide precursor and a lithium raw material in the method for manufacturing a positive electrode active material for a lithium secondary battery may be a step of mixing raw materials before the calcination step.

In one embodiment, the metal hydroxide precursor may be a plate-shaped precursor. The plate-shaped precursor is defined as a form in which primary particles have two relatively flat surfaces, and refers to a precursor comprising primary particles that have a substantially plate shape, a flake shape, or a mixture thereof. In one embodiment, the metal hydroxide precursor may contain at least one selected from the group consisting of Ni, Co, and Mn. Specifically, the metal hydroxide precursor may be purchased and used, or may be directly manufactured and used using a common method performed in the art.

For example, the metal hydroxide precursor may be manufactured by adding a complexing agent-containing solution and a pH adjuster-containing solution to a metal-containing solution including a nickel raw material, a manganese raw material, or a cobalt raw material to perform a co-precipitation reaction, but is not limited thereto.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, or oxyhydroxide, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, fatty acid nickel salts, nickel halides, or combinations thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, or oxyhydroxide, and specifically may be CoSO₄, CoSO₄·7H₂O, Co(OH)₂, CoOOH, Co(OCOCH₃)₂·4H₂O, Co(NO₃)₂·6H₂O, or combinations thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or combinations thereof, and specifically may be MnSO₄, MnCO₃, Mn(NO₃)₂, manganese acetate, dicarboxylic acid manganese salts, manganese citrate, manganese salts such as fatty acid manganese salts, manganese oxides such as Mn₂O₃, MnO₂, and Mn₃O₄, oxyhydroxides, manganese chloride, or combinations thereof, but is not limited thereto.

The metal-containing solution may be manufactured by adding a nickel raw material, a manganese raw material, or a cobalt raw material to a solvent, specifically water, or a mixture of water and an organic solvent (e.g., alcohol, etc.) that can be uniformly mixed with water.

The complexing agent-containing solution serves to form a complex formation and may include, for example, NH₃, NH₄OH, (NH₄)₂SO₄, NH₄NO₃, NH₄Cl, CH₃COONH₄, NH₄CO₃, or combinations thereof as a complexing agent, but is not limited thereto. Meanwhile, the complexing agent-containing solution may be used in the form of an aqueous solution, and in this case, water or a mixture of water and an organic solvent (e.g., alcohol, etc.) that can be uniformly mixed with water may be used as a solvent.

The pH adjuster-containing solution serves as a precipitant or pH adjuster and may include an alkali compound of a hydroxide of an alkali metal or alkaline earth metal such as NaOH, KOH, or Ca(OH)₂, a hydrate thereof, or a combination thereof. Meanwhile, the pH adjuster-containing solution may also be used in the form of an aqueous solution, and in this case, water or a mixture of water and an organic solvent (e.g., alcohol, etc.) that can be uniformly mixed with water may be used as a solvent. At this time, the pH adjuster-containing solution may be added in an amount such that the pH of the reaction solution is 10 to 13.

The co-precipitation reaction may be performed under an inert atmosphere such as nitrogen or argon, and may be performed at a temperature of 30 to 70°C and at a pH of 10 to 13.

Through the aforementioned process, particles of nickel (-or manganese-cobalt) hydroxide are generated and precipitated in the reaction solution. The precipitated precursor particles are separated according to a common method, washed with water, and dried to obtain a precursor.

At this time, by adjusting the concentration of the nickel raw material, cobalt raw material, or manganese raw material, the molar ratio of nickel, cobalt, or manganese in the precursor can be adjusted. That is, the concentration of the nickel raw material, cobalt raw material, and manganese raw material can be adjusted so that the molar ratio of nickel, cobalt, or manganese in the final product, lithium metal oxide, is within the range according to the present invention.

As the lithium raw material, lithium-containing sulfate, nitrate, acetate, carbonate, oxalate, citrate, halide, hydroxide, or oxyhydroxide may be used, and it is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or combinations thereof, but is not limited thereto.

The lithium raw material may be added such that the molar ratio of lithium (Li/Me) to the total metal in the metal hydroxide precursor and the doping element is 1.02 to 1.08, and preferably 1.02 to 1.05.

While not wishing to be bound by theory, part of the lithium raw material may be lost during the oxidation process. When the input amount of the lithium raw material satisfies the aforementioned range, a positive electrode active material for a lithium secondary battery having a desired composition can be obtained, which is preferable.

In one embodiment, in the step of forming a mixture, the mixture may include a doping element. The doping element may contain at least one selected from the group consisting of zirconium and yttrium.

In one embodiment, the doping element may further include at least one selected from the group consisting of the aforementioned B, Al, Mg, Ti, Nb, W, Sc, Si, V, Fe, Mo, Ce, Hf, Ta, La, and Sr, in addition to the zirconium and yttrium, but is not limited thereto. For a detailed description of the doping element, reference may be made to the content of the positive electrode active material for a lithium secondary battery described above.

The step of performing a first calcination of the mixture to obtain a calcinated product may be performed at 830 to 870°C. Specifically, the first calcination step may be performed at 840 to 860°C.

When the first calcination is performed in the above temperature range, a phenomenon in which overgrown particles or undergrown particles are generated can be suppressed, and the cation mixing ratio of nickel cations in the lithium layer within the crystal structure of the lithium metal oxide particles can be easily controlled.

If the first calcination temperature exceeds the upper limit of the aforementioned range, there is a problem that particles grow excessively and are not properly pulverized and deagglomerated. If the first calcination temperature is below the lower limit of the aforementioned range, there is a problem that particles are undergrown and are not properly pulverized and deagglomerated.

In one embodiment, the first calcination may be performed for 2 to 6 hours. Specifically, the first calcination may be performed for 3 to 5 hours.

As the first calcination is performed in the aforementioned time range, a positive electrode active material grown to a grain size suitable for pulverization and deagglomeration can be easily obtained. If the time exceeds the upper limit of the aforementioned range, there is a problem that particles grow excessively and are not properly pulverized and deagglomerated. If the time is below the lower limit of the aforementioned range, there is a problem that particles are undergrown and are not properly pulverized and deagglomerated.

In one embodiment, in the step of performing the first calcination to obtain a calcinated product, the calcinated product may satisfy the following Equation 2: $1.00 \leq C - D \leq 5.00$ (In Equation 2, C is a sum of fine powder values of 1 µm or less after pressing when 3 g of a sample of the first calcinated product is introduced into a 1.3 cm diameter mold and pressed at 9 tons, and B is a sum of fine powder values of 1 µm or less before pressing.)

Equation 2 may be an index of (particle growth in the first calcination). Equation 2 may be 1.00 to 5.00, specifically 1.20 to 4.80, and more specifically 1.50 to 4.50. By satisfying Equation 2, there is an advantage suitable for pulverization and deagglomeration after the first calcination of the positive electrode active material for a lithium secondary battery.

If Equation 2 exceeds the upper limit of the aforementioned range, there is a problem that particles are undergrown and are not properly pulverized and deagglomerated. If Equation 2 is below the lower limit of the aforementioned range, there is a problem that particles grow excessively and are not properly pulverized and deagglomerated.

In one embodiment, a Li/Ni cation mixing degree of the calcinated product obtained in the step of performing the first calcination to obtain the calcinated product may satisfy 1.3 to 2.1%. Specifically, the mixing degree may be 1.4 to 2.1, and more specifically 1.5 to 2.0.

Since the mixing degree of the first calcinated product satisfies the aforementioned range, there is an advantage that a phenomenon in which the lithium layer collapses and cycle life characteristics of a battery decrease is reduced. Since the mixing degree satisfies the aforementioned range, it is preferable because a phenomenon in which lithium ion mobility is lowered and resistance characteristics and output characteristics are deteriorated can be suppressed.

The step of pulverizing the calcinated product to obtain a metal oxide may be a step of pulverizing and deagglomerating the calcinated product using a jet mill at a pressure of 2.0 to 5.0 bar to obtain a metal oxide.

When the pulverization and deagglomeration are performed at a pressure in the above range, the positive electrode active material in a single particle form grown through the second calcination to be described later has an appropriate particle size and can impart excellent cycle life characteristics when applied to a lithium secondary battery.

Compared to rotor mills, ball mills, pin mills, bead mills, roll mill equipment, etc., the jet mill allows for the pulverization of various materials and has the advantage of dry pulverization and deagglomeration of materials without contamination. In particular, since various particle sizes can be adjusted, there is an advantage that quality control is possible with the same particle size during repeated production.

The step of pulverizing and deagglomerating the calcinated product using a jet mill at a pressure of 2.0 to 5.0 bar to obtain a metal oxide may further include a step of deagglomerating the calcinated product using a rotor mill, ball mill, pin mill, bead mill, roll mill equipment, etc., beforehand, but is not limited thereto.

Deagglomeration conditions for the step of deagglomerating using the rotor mill, ball mill, pin mill, bead mill, roll mill equipment, etc., can be appropriately performed within a range that does not impair the object of the present invention and are not specifically limited in the present invention.

Deagglomeration is generally performed after calcination is completed, but the method for manufacturing a positive electrode active material for a lithium secondary battery according to the present invention undergoes a deagglomeration step, specifically a pulverization and deagglomeration step, between the first calcination and the second calcination.

In one embodiment, the pulverization and deagglomeration may be performed by cooling the calcinated product to a temperature of 50 to 200°C, specifically 50 to 100°C. Cooling to the cooling temperature may be performed at room temperature, and when cooling to the cooling temperature, the reaction between external moisture and the calcinated product can be suppressed, and an increase in residual lithium can be suppressed.

The step of performing a second calcination of the metal oxide to obtain lithium metal oxide particles may be performed at 750 to 830°C. Specifically, the second calcination may be performed in a range of 760 to 820°C, and more specifically 770 to 810°C. When the second calcination is performed in the above calcination temperature range, the crystal structure of the obtained lithium metal oxide particles can be stabilized.

Specifically, as lithium by-products remaining on the surface of the lithium metal oxide particles are decomposed by heat and diffuse into the lithium metal oxide particles, the amount of lithium remaining on the surface is reduced. As the lithium ions react with the surface of the lithium metal oxide particles to form a stable layered structure, the surface structure of the lithium metal oxide particles is stabilized, thereby providing advantages of improving side reactions with the electrolyte, resistance, and cycle life characteristics.

The second calcination may be performed for 8 to 12 hours, but is not limited thereto. When the second calcination is performed within the above time range, it is preferable because a phenomenon in which lithium by-products remaining on the surface of the lithium metal oxide particles are decomposed by heat and diffuse into the lithium metal oxide particles is sufficient.

In one embodiment, a content of LiOH may be 0.40 wt% or less based on 100 wt% of a total weight of the positive electrode active material. Specifically, the content of LiOH may be 0.35 wt% or less.

The lithium metal oxide particles after the second calcination is completed may further undergo a deagglomeration step, but is not limited thereto. At this time, deagglomeration can be performed using a rotor mill, ball mill, pin mill, bead mill, roll mill equipment, etc., and the deagglomeration conditions are not particularly limited as long as they are within a range that does not impair the object of the present invention.

As described above, the positive electrode active material for a lithium secondary battery manufactured according to the method for manufacturing a positive electrode active material for a lithium secondary battery does not need to undergo an additional heat treatment process because of its low residual lithium, and has an excellent advantage of not requiring separate washing and drying processes.

According to another embodiment of the present invention, a lithium secondary battery is provided, comprising: a positive electrode including the aforementioned positive electrode active material; a negative electrode; and a non-aqueous electrolyte.

The positive electrode includes a current collector and a positive electrode active material layer positioned on the current collector. The positive electrode active material layer includes a positive electrode active material, and the positive electrode active material may include the positive electrode active material for a lithium secondary battery according to one embodiment described above. In the positive electrode active material layer, a content of the positive electrode active material may be 90 wt% to 99 wt% based on a total weight of the positive electrode active material layer.

The positive electrode active material layer may further include a binder and/or a conductive material. In this case, each of the contents of the binder and the conductive material may be 1 wt% to 5 wt% based on the total weight of the positive electrode active material layer.

The binder serves to well adhere the positive electrode active material particles to each other and also to well adhere the positive electrode active material to the current collector. Representative examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, etc., but are not limited thereto.

The conductive material is used to impart conductivity to an electrode, and any electronic conductive material can be used as long as it does not cause chemical changes in a battery. Examples of the conductive material include carbon-based materials such as natural graphite, artificial graphite, carbon black, acetylene black, ketjen black, and carbon fibers; metal-based materials such as metal powder or metal fibers of copper, nickel, aluminum, silver, etc.; conductive polymers such as polyphenylene derivatives; or conductive materials including mixtures thereof.

As the positive electrode current collector, an aluminum foil, a nickel foil, or combinations thereof may be used, but it is not limited thereto.

The negative electrode includes a current collector and a negative electrode active material layer formed on the current collector, and the negative electrode active material layer includes a negative electrode active material.

The negative electrode active material includes a material capable of reversibly intercalating/deintercalating lithium ions, lithium metal, an alloy of lithium metal, a material capable of doping and undoping lithium, or a transition metal oxide.

As the material capable of reversibly intercalating/deintercalating lithium ions, any carbon-based negative electrode active material generally used in lithium ion secondary batteries can be used as a carbon material, and representative examples thereof include crystalline carbon, amorphous carbon, or a combination thereof.

As the alloy of the lithium metal, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

Examples of the material capable of doping and undoping lithium include Si, SiOₓ (0 < x < 2), a Si-Y alloy (where Y is an element selected from the group consisting of alkali metals, alkaline earth metals, Group 13 elements, Group 14 elements, transition metals, rare earth elements, and combinations thereof, but not Si), Sn, SnO₂, a Sn-Y alloy (where Y is an element selected from the group consisting of alkali metals, alkaline earth metals, Group 13 elements, Group 14 elements, transition metals, rare earth elements, and combinations thereof, but not Sn), and the like.

Examples of the transition metal oxide include vanadium oxide, lithium vanadium oxide, and the like. The negative electrode active material layer also includes a binder, and may optionally further include a conductive material.

The binder serves to well adhere the negative electrode active material particles to each other and also to well adhere the negative electrode active material to the current collector.

The conductive material is used to impart conductivity to an electrode, and any electronic conductive material can be used as long as it does not cause chemical changes in a battery.

As the current collector, one selected from the group consisting of a copper foil, a nickel foil, a stainless steel foil, a titanium foil, a nickel foam, a copper foam, a polymer substrate coated with a conductive metal, and combinations thereof may be used.

The negative electrode and the positive electrode are manufactured by mixing an active material, a conductive material, and a binder in a solvent to manufacture an active material composition and coating the composition on a current collector. Since such an electrode manufacturing method is widely known in the field, a detailed description thereof will be omitted in this specification. As the solvent, N-methylpyrrolidone or the like may be used, but it is not limited thereto.

The electrolyte includes a non-aqueous organic solvent and a lithium salt.

The non-aqueous organic solvent serves as a medium through which ions involved in the electrochemical reaction of a battery can move.

The lithium salt is a material that dissolves in an organic solvent, acts as a source of lithium ions in a battery to enable basic lithium secondary battery operation, and serves to promote the movement of lithium ions between the positive electrode and the negative electrode.

Depending on the type of lithium secondary battery, a separator may exist between the positive electrode and the negative electrode. As such a separator, polyethylene, polypropylene, polyvinylidene fluoride, or a multi-layered film of two or more layers thereof may be used, and mixed multi-layered films such as a polyethylene/polypropylene 2-layer separator, a polyethylene/polypropylene/polyethylene 3-layer separator, a polypropylene/polyethylene/polypropylene 3-layer separator, etc., may also be used.

Lithium secondary batteries can be classified into lithium ion batteries, lithium ion polymer batteries, and lithium polymer batteries depending on the types of separator and electrolyte used, and can be classified into cylindrical, prismatic, coin-type, pouch-type, etc., depending on the shape, and can be divided into bulk type and thin film type depending on the size. Structures and manufacturing methods for these batteries are widely known in the field, so detailed descriptions are omitted.

Preferred examples and comparative examples of the present invention will be described below. However, the following examples are only one preferred embodiment of the present invention, and the present invention is not limited to the following examples.

### Experimental Examples

### <Comparative Example 1>

### 1. Manufacture of Precursor

A positive electrode active material precursor was manufactured by a general co-precipitation method. NiSO₄·6H₂O was used as a nickel raw material, CoSO₄·7H₂O was used as a cobalt raw material, and MnSO₄·H₂O was used as a manganese raw material. These raw materials were dissolved in distilled water to manufacture an aqueous metal salt solution.

After preparing a co-precipitation reactor, N₂ was purged to prevent oxidation of metal ions during the co-precipitation reaction. The reactor temperature was maintained at 50°C. NH₄(OH) was added as a chelating agent to the co-precipitation reactor, and NaOH was used for pH adjustment. The precipitate obtained according to the co-precipitation process was filtered, washed with distilled water, and dried in a 180°C cake dryer to manufacture a positive electrode active material precursor.

The composition of the manufactured precursor was (Ni_{0.90}Co_{0.05}Mn_{0.05})(OH)₂, and the primary particles exhibited a plate-shaped form.

### 2. Manufacture of Positive Electrode Active Material

Manufacture of positive electrode active material for a lithium secondary battery: First calcination

### <Preparation Example 1-1>

170.93 g of the positive electrode active material precursor manufactured in 1, 79.07 g of LiOH·H₂O, and ZrO₂ and Y₂O₃ as doping raw materials were weighed respectively, and then mixed uniformly using a mixer. Calcination was performed in a box-type furnace where an O₂ atmosphere was maintained.

At this time, LiOH·H₂O was added so that the molar ratio (Li/Me) of lithium to the total metal in the metal precursor was 1.02. ZrO₂ was added so that the doping amount of Zr in the lithium metal oxide particles was 2500 ppm, and Y₂O₃ was added so that the doping amount of Y in the lithium metal oxide particles was 1200 ppm.

Thereafter, a first calcination was performed at a temperature of 900°C for 4 hours to manufacture a first calcinated product.

### <Preparation Example 1-2>

A positive electrode active material precursor and a first calcinated product were manufactured in the same manner as in Comparative Example 1, except that the first calcination temperature was 880°C.

### <Preparation Example 1-3>

A positive electrode active material precursor and a first calcinated product were manufactured in the same manner as in Comparative Example 1, except that the first calcination temperature was 860°C.

### <Preparation Example 1-4>

A positive electrode active material precursor and a first calcinated product were manufactured in the same manner as in Comparative Example 1, except that the first calcination temperature was 840°C.

### <Preparation Example 1-5>

A positive electrode active material precursor and a first calcinated product were manufactured in the same manner as in Comparative Example 1, except that the first calcination temperature was 820°C.

### <Preparation Example 1-6>

A positive electrode active material precursor and a first calcinated product were manufactured in the same manner as in Comparative Example 1, except that the first calcination temperature was 800°C.

Table 1 below shows the average particle size (D₅₀), specific surface area (BET), Li/Ni (%), and fine powder values of 1 µm or less before and after performing a 9-ton press according to the first calcination. At this time, the average particle size (D₅₀), specific surface area (BET), Li/Ni (%), and fine powder values of 1 µm or less before and after the 9-ton press were measured by the following methods.

**Average particle size (D₅₀):** The average particle size (D₅₀) was measured through a Microtrac (S3000) instrument using a laser diffraction method. The volume-based average particle size (Dv₅₀) can be defined as a particle size corresponding to 50% of a volume cumulative amount in a particle size distribution curve of particles.

**BET specific surface area:** The BET specific surface area was measured using a Brunauer-Emmett-Teller Analysis method based on a nitrogen adsorption method. The specific surface area of a material was measured by measuring the adsorption amount per partial pressure by adsorbing and desorbing nitrogen gas on the surface of a solid sample using the BET equation.

**Li/Ni cation mixing degree:** The cation mixing ratio of nickel cations in the lithium layer within the crystal structure of the metal oxide of the obtained calcinated product was measured through XRD. Specifically, raw data measured through XRD were Rietveld refined applying the above details, and the Ni1(3b) occupancy value was used for calculation.

**9-ton press:** 3 g of a sample was introduced using a 1.3 cm diameter mold and pressed at 9 tons. Particle size analysis was performed on the sample before and after pressing through a Malvern (MS3000) instrument using a laser diffraction method to calculate a sum of ratios of less than 1 µm.

**[Table 1]**

| | First calcination temperature | D50 | BET | Li/Ni | 9 ton press | | |
|---|---|---|---|---|---|---|---|
| | | | | | Before | After | Equation 2 |
| | [°C] | [µm] | [m²/g] | [%] | [vol%] | [vol%] | |
| Preparation Example 1-1 | 900 | 4.06 | 0.35 | 3.1 | 0.00 | 0.71 | 0.71 |
| Preparation Example 1-2 | 880 | 3.62 | 0.40 | 2.2 | 0.65 | 0.95 | 0.3 |
| Preparation Example 1-3 | 860 | 3.18 | 0.45 | 2.0 | 0.88 | 1.92 | 1.04 |
| Preparation Example 1-4 | 840 | 3.13 | 0.56 | 1.5 | 1.50 | 4.05 | 2.55 |
| Preparation Example 1-5 | 820 | 3.57 | 0.64 | 1.2 | 2.51 | 9.86 | 7.35 |
| Preparation Example 1-6 | 800 | 3.84 | 0.65 | 1.1 | 2.96 | 14.58 | 11.62 |

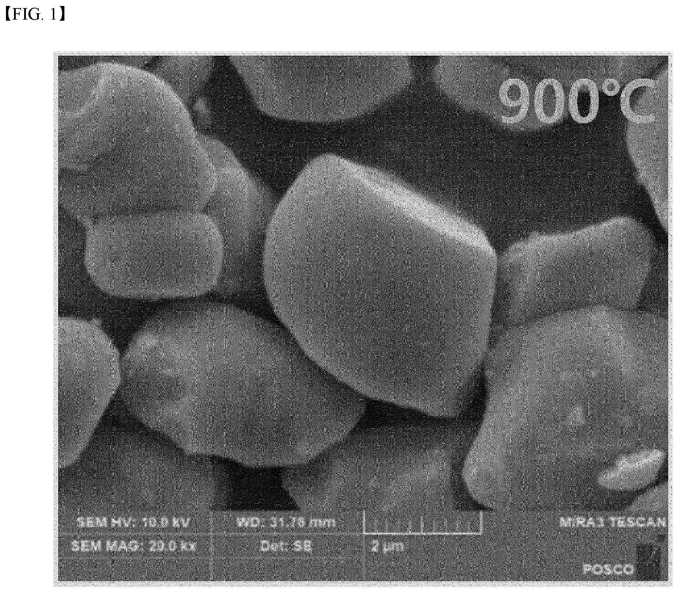

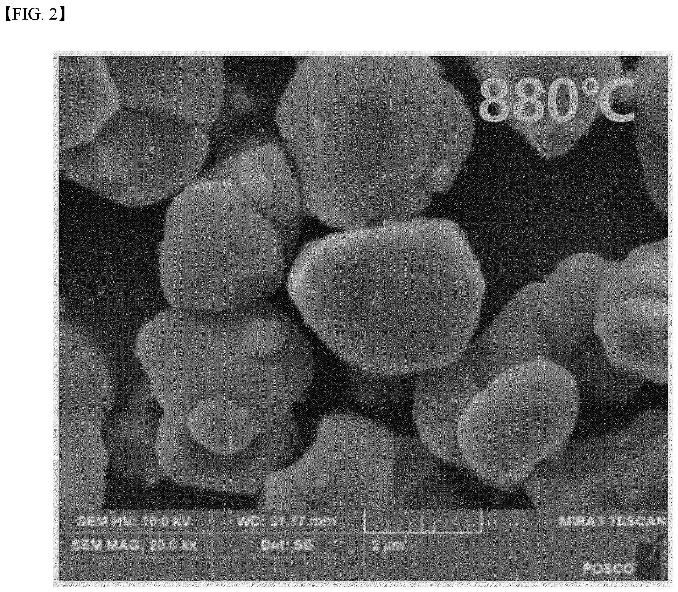

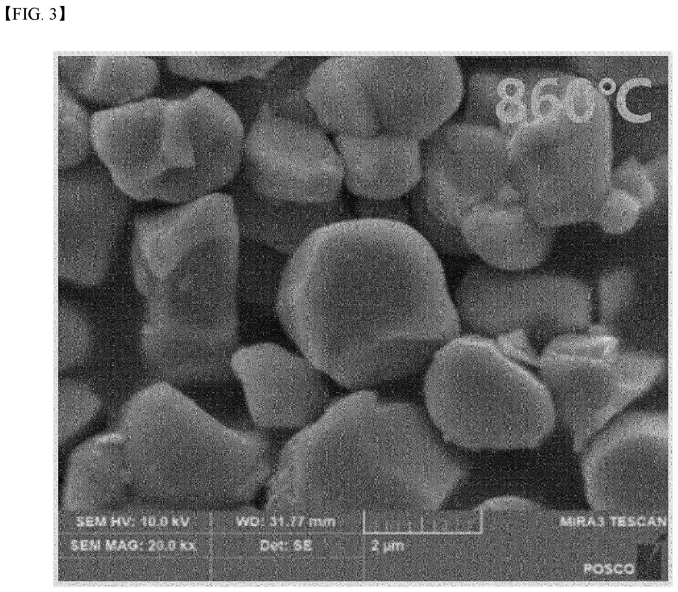

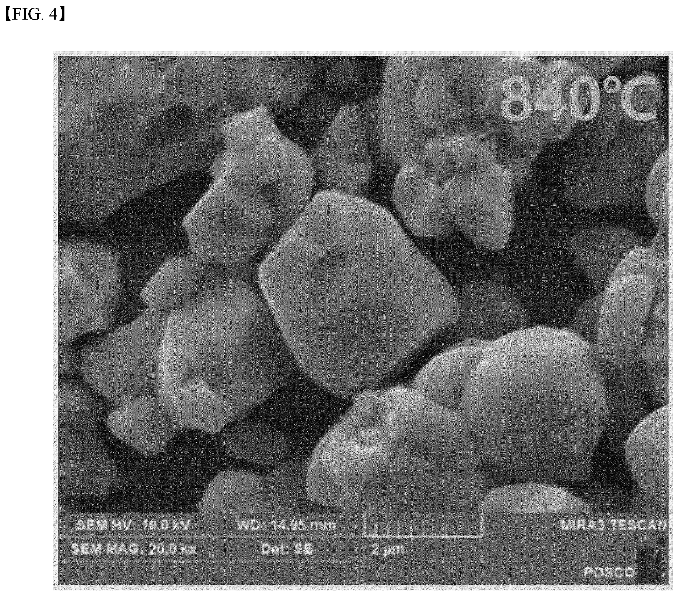

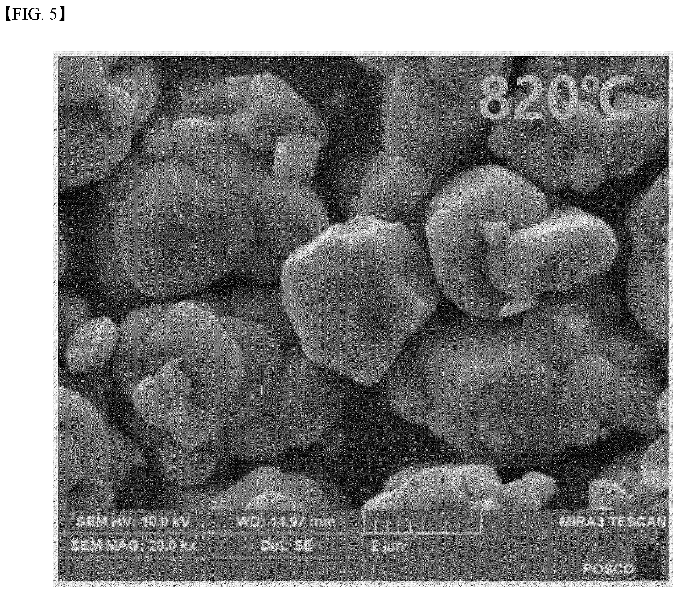

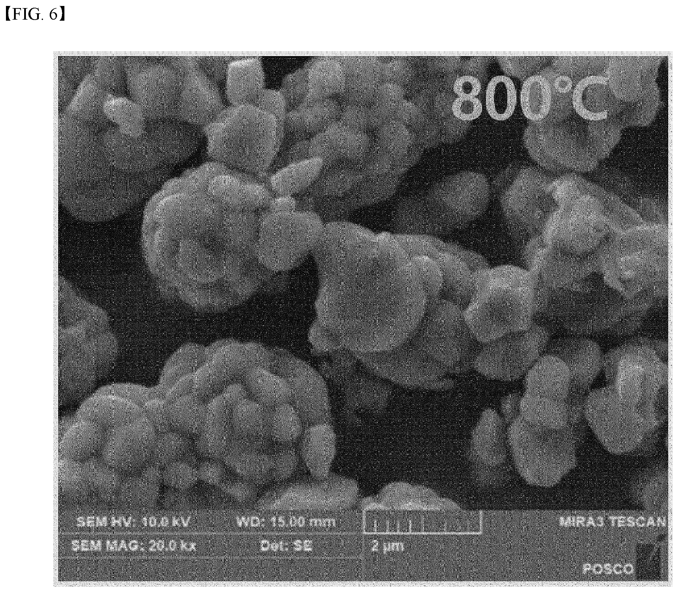

Results observed using SEM are shown in FIGS. 1 to 6. Referring to FIGS. 1 to 6 and Table 1, it was confirmed that when the first calcination step is performed at temperatures of 840 and 860°C as in Preparation Examples 1-3 and 1-4, single particles exhibiting a Li/Ni mixing degree of 1.5 to 2.0% are produced, and a first calcinated product having an average particle size (D₅₀) that is not excessively large or small can be obtained.

In contrast, in Preparation Examples 1-1 and 1-2, in which the first calcination temperature was excessively higher than 860°C, it was confirmed that there was a problem that overgrown particles were produced, and in Preparation Examples 1-5 and 1-6, in which the first calcination temperature was excessively lower than 840°C, it was confirmed that there was a problem that undergrown particles were produced.

### Manufacture of positive electrode active material for a lithium secondary battery: Grinding and pulverizing

### <Preparation Example 2-1>

Thereafter, the first calcinated product manufactured according to Preparation Example 1-4 was cooled from room temperature to a temperature of 80°C and then ground and pulverized using a jet mill under a condition of 3.0 Bar, respectively.

### <Preparation Example 2-2>

Thereafter, the first calcinated product manufactured according to Preparation Example 1-4 was cooled from room temperature to a temperature of 80°C and then ground and pulverized using a jet mill under a condition of 3.5 Bar, respectively.

### <Preparation Example 2-3>

Thereafter, the first calcinated product manufactured according to Preparation Example 1-4 was cooled from room temperature to a temperature of 80°C and then ground and pulverized using a jet mill under a condition of 4.0 Bar, respectively.

Table 2 below shows the average particle size (D₅₀) and specific surface area (BET) of the pulverized products when the jet mill conditions were controlled according to Preparation Examples 2-1 to 2-3.

**[Table 2]**

| | Jet mill (Bar) | D₅₀ (*µ*m) | BET (m²/g) |
|---|---|---|---|
| Preparation Example 2-1 | 3.0 | 3.17 | 0.50 |
| Preparation Example 2-2 | 3.5 | 3.05 | 0.56 |
| Preparation Example 2-3 | 4.0 | 2.84 | 0.57 |

Referring to Table 2, it was confirmed that when jet milling was performed at a pressure of 4.0 bar or higher, the average particle size of the pulverized product was controlled in a range of 2.5 to 3.0 µm and the specific surface area was high, thereby promoting particle growth during the second calcination. In contrast, as in Preparation Examples 2-1 and 2-2, it was confirmed that when jet milling was performed at a pressure lower than 4.0 bar, the average particle size and specific surface area of the pulverized product were outside the scope of the present invention.

### Manufacture of positive electrode active material for a lithium secondary battery: Examples

The metal oxide manufactured according to Preparation Example 2-3 was subjected to a second calcination at a calcination temperature of 770 °C for 9 hours to manufacture positive electrode active materials for a lithium secondary battery according to Examples 1 to 3.

### Manufacture of positive electrode active material for a lithium secondary battery: Comparative Examples

A plate-shaped metal hydroxide precursor manufactured according to the Preparation Example, LiOH·H₂O, and ZrO₂ and Y₂O₃ as doping elements were introduced into a mixer and mechanically mixed to form a mixture. At this time, LiOH·H₂O, ZrO₂, and Y₂O₃ were added in the same manner as in the aforementioned first calcination step.

Specifically, after a single calcination at a temperature of 840 °C for 4 hours and at a temperature of 770 °C for 9 hours for a total of 13 hours, the product was cooled from room temperature to a temperature of 50 °C and then ground and pulverized using a jet mill at a pressure of 3.0 bar to obtain a positive electrode active material for a lithium secondary battery.

### Manufacture of lithium secondary battery

In order to investigate the electrochemical characteristics of the positive electrode active materials for a lithium secondary battery manufactured according to Examples and Comparative Examples, lithium secondary batteries were manufactured using the same.

A slurry for manufacturing an electrode plate was mixed in a ratio of the manufactured positive electrode active material : conductive material (carbon black, Super C) : binder (PVDF, KF1120) = 96.5 : 1.5 : 2 wt%, and N-methyl-2-pyrrolidone (NMP) was added to adjust the viscosity such that the solid content was about 70%. The manufactured slurry was coated on an Al foil having a thickness of 20 µm using a doctor blade, followed by drying and rolling. The electrode loading amount was 16.7 mg/cm², and the press density (at 25 °C) was 3.5 g/cm³.

The electrolyte used was 1M LiPF₆ in EC:DMC:EMC=3:4:3 (vol%), to which 3.0 wt% of VC, 0.5 wt% of PS, and 1.0 wt% of ESA were added based on the total weight of the electrolyte. A coin cell was manufactured using a PP separator and a lithium negative electrode (200 µm, Welcos).

### <Evaluation Examples>

Table 3 below shows the particle sizes of the positive electrode active materials of Examples and Comparative Examples according to volume and number, and Table 4 below shows the residual lithium content, specific surface area (BET), electrochemical characteristics, and fine powder values of 1 *µ*m or less before and after performing a 9-ton press. The average particle size, residual lithium content, and electrochemical characteristics were measured by the following methods.

**Particle size (Dmin, D₅₀, Dmax):** Dmin, D₅₀, and Dmax were measured through a Microtrac (S3000) instrument using a laser diffraction method. Specifically, Dmin, D₅₀, and Dmax were defined as particle sizes corresponding to the minimum value, 50%, and the maximum value, respectively, according to the volume cumulative amount (%) and the number cumulative amount (%) in the particle size distribution curve of the particles based on volume and number.

**Press Density (PD) (g/cc):** The press density was determined by weighing 10 g of each obtained calcinated product and pressing it twice at 108N to calculate an average value.

**Residual lithium content:** The residual lithium content was measured using an automatic titrator (Model T50, manufactured by METTLER TOLEDO). Specifically, 5 g of the positive electrode active material was added to 100 ml of pure water, stirred, and then filtered under reduced pressure to obtain a solution. The obtained solution was neutralized and titrated with the automatic titrator, and the value was measured to evaluate residual lithium.

The residual lithium value was calculated using the following calculation formulas: $LiOH = \left(\left(VEQ1+VEQ2\right)-2\times VEQ2\right) \times C \times Mw \times 1000 / M$ ${Li}_{2} {CO}_{3} = VEQ 2 \times C \times Mw \times 1000 / M$
- VEQ1: Consumption (ml) at VEQ1 of 0.1N HCl
- VEQ2: Consumption (ml) of 0.1N HCl from VEQ1 to VEQ2
- C: Concentration of HCl (N) - 0.1N
- M: (Sample Weight × Solution Weight) / DIW Weight
- Mw: Molecular weight (Li₂CO₃: 73.89 g/mol, LiOH: 23.94 g/mol)

**Initial capacity and initial efficiency evaluation:** After manufacturing a lithium secondary battery half-cell, it was aged at 25 °C for 12 hours, and then a charge/discharge test was performed at 25 °C. For the initial capacity evaluation, 200 mAh/g was used as a reference capacity, and the cell was charged to 4.3V at a constant current of 0.1C and then switched to a constant voltage until the end current reached 0.05C. After a rest time of 10 minutes after charging, discharging was performed at a constant current of 0.1C based on 200 mAh/g as a reference capacity until reaching 3.0V.

**High-temperature cycle life evaluation:** After manufacturing a lithium secondary battery half-cell, it was charged to 4.3V at a constant current of 0.5C at 45 °C and then switched to a constant voltage until the end current reached 0.05C. After a rest time of 10 minutes after charging, discharging was performed at a constant current of 1.0C until reaching 3.0V. Under such charge/discharge cycle conditions, 30 cycles of charging and discharging were performed, and the capacity retention of the 30th cycle relative to the first cycle was calculated.

**[Table 3]**

| | Volume(*µ*m) | | | Number(*µ*m) | | |
|---|---|---|---|---|---|---|
| | Dmin | D50 | Dmax | Dmin | D50 | Dmax |
| Example | 2.05 | 4.75 | 11.48 | 1.70 | 3.26 | 7.33 |
| Comparative Example | 1.36 | 3.45 | 10.92 | 1.01 | 2.28 | 9.16 |

**[Table 4]**

| | Calcination temperature (°C) | PD (g/cc) | BET (m2/g) | Residual lithium | | | 0.1C/0.1C | | | 0.5C/1C 30th cycle @45°C capacity retention (%) | 9 ton press | | |
|---|---|---|---|---|---|---|---|---|---|---|---|---|---|
| | | | | | | | Initial Cycle @25°C | | | | | | |
| | | | | LiOH (wt%) | Li₂CO₃ (wt%) | Total (wt%) | charge (mAh/g) | discharge (mAh/g) | efficienc y (%) | | Before | After | Equation 1 |
| Example | (Secon d calcin ation) 790 | 2.068 | 0.45 | 0.19 | 0.16 | 0.34 | 239.0 | 213.0 | 89.1 | 93.1 | 0.72 | 1.74 | 1.02 |
| Comparative Example | (Single calcination) 840 / 770 | 1.982 | 0.61 | 0.72 | 0.25 | 0.97 | 232.7 | 205.1 | 88.1 | 90.7 | 1.31 | 2.77 | 1.46 |

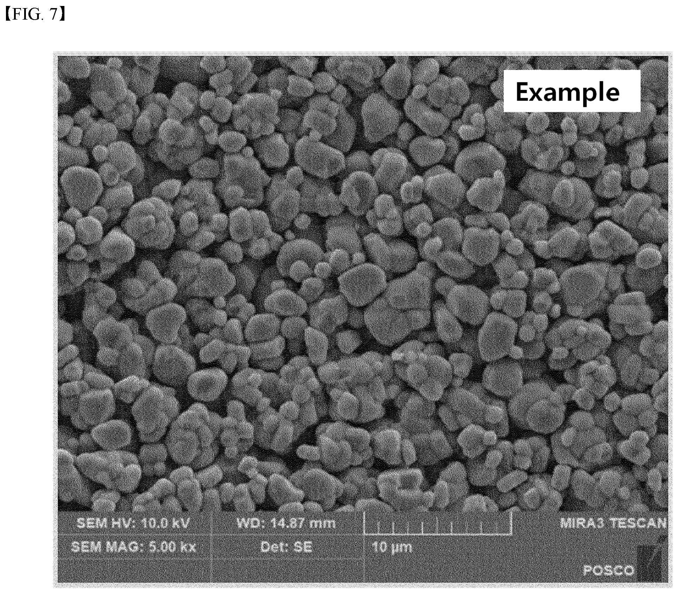

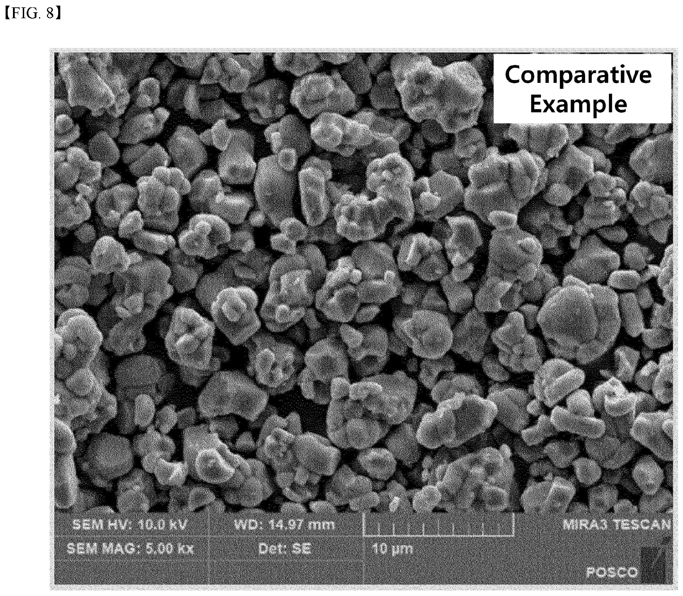

Further, results of observing the positive electrode active materials for a lithium secondary battery manufactured according to the Examples and the Comparative Examples using SEM are shown in FIGS. 7 and 8, respectively. Referring to FIGS. 7 and 8 and Table 3, it can be confirmed that the Examples have an excellent residual lithium removal effect, unlike the Comparative Examples in which a single calcination was performed. In particular, it was confirmed that LiOH was effectively removed in the Examples as compared to the Comparative Examples.

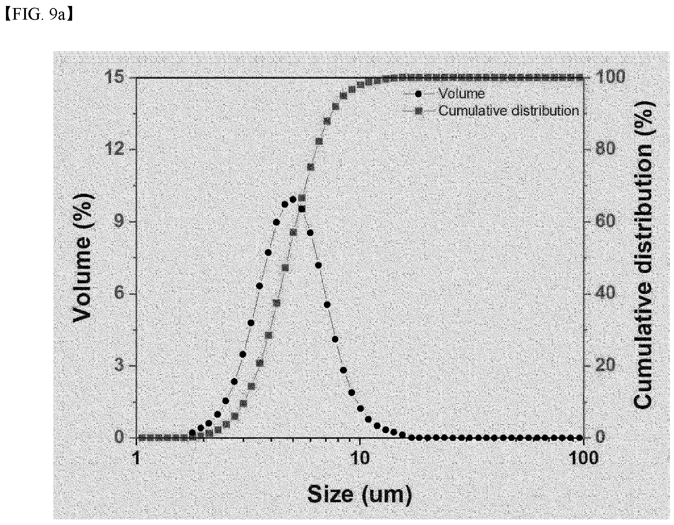

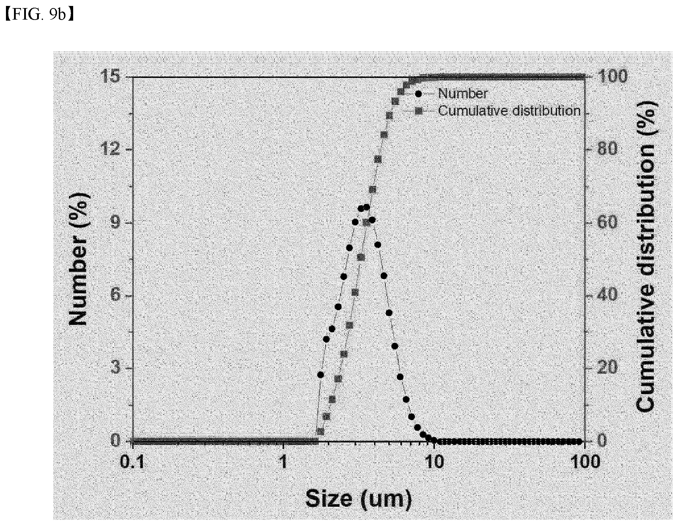

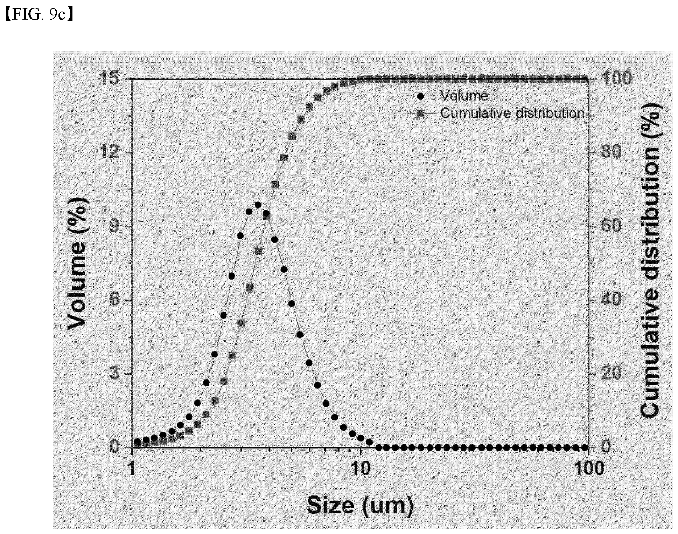

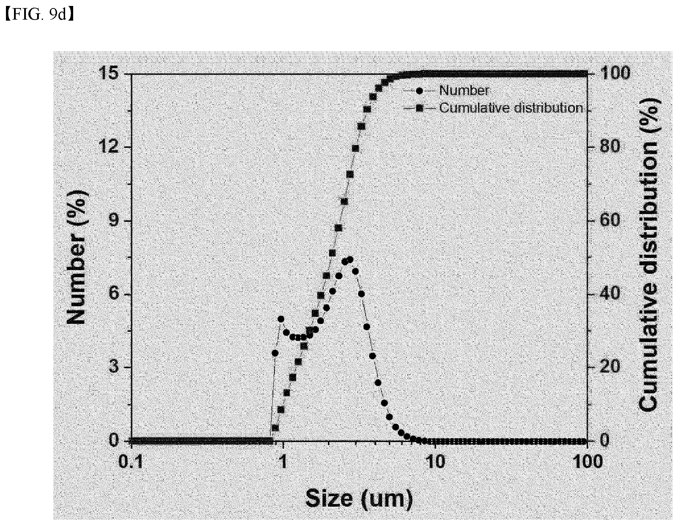

FIGS. 9a and 9b are graphs showing grain sizes of the positive electrode active materials for a lithium secondary battery manufactured according to the Examples, and FIGS. 9c and 9d show grain sizes of the positive electrode active materials for a lithium secondary battery manufactured according to the Comparative Examples.

Referring to FIGS. 9a to 9d, it was confirmed that the Examples exhibited excellent particle growth even under the same conditions as compared to the Comparative Examples, and it was confirmed that particle uniformity was improved due to a smaller number of agglomerated particles. In addition, it was confirmed that since a ratio of fine powder of 1 µm or less was low, an increase and a relative ratio of the fine powder were low even after the 9-ton press, thereby improving the single-particle degree.

As such, it was confirmed that the Examples of the single particles manufactured according to the Preparation Examples of the present invention exhibit excellent charge/discharge capacity and initial efficiency as compared to single particles derived by a single calcination.

Although the preferred embodiments have been described in detail above, the scope of the rights of the present invention is not limited thereto, and various modifications and improvements made by those skilled in the art using the basic concepts defined in the following claims also fall within the scope of the rights of the present invention.

## Claims

1. A positive electrode active material for a lithium secondary battery, comprising lithium metal oxide particles including lithium, nickel, cobalt, and manganese, wherein the positive electrode active material satisfies the following Equation 1: $A - B \leq 1.30$ (In Equation 1, A is a sum of fine powder values (vol%) of 1 µm or less after pressing when 3 g of a sample of the positive electrode active material is introduced into a 1.3 cm diameter mold and pressed at 9 tons, and B is a sum of fine powder values (vol%) of 1 µm or less before pressing.).

2. The positive electrode active material for a lithium secondary battery of claim 1, wherein the B is 1.20 to 2.50.

3. The positive electrode active material for a lithium secondary battery of claim 1, wherein the A is 0.5 to 0.9.

4. The positive electrode active material for a lithium secondary battery of claim 1, wherein a content of residual lithium is 0.50 wt% or less based on 100 wt% of a total weight of the positive electrode active material.

5. The positive electrode active material for a lithium secondary battery of claim 4, wherein the residual lithium includes LiOH, and a content of the LiOH is 0.4 wt% or less based on 100 wt% of a total weight of the positive electrode active material.

6. The positive electrode active material for a lithium secondary battery of claim 1, wherein an average particle size (D₅₀) is 3.0 to 5.0 µm.

7. The positive electrode active material for a lithium secondary battery of claim 1, wherein a specific surface area is 0.40 to 0.55 m²/g.

8. The positive electrode active material for a lithium secondary battery of claim 1, wherein the positive electrode active material is a single particle.

9. The positive electrode active material for a lithium secondary battery of claim 1, wherein a content of the nickel is 0.85 mol or more based on 1 mol of a total of the nickel, manganese, and doping elements.

10. A method for manufacturing a positive electrode active material for a lithium secondary battery, comprising:
forming a mixture including a metal hydroxide precursor and a lithium raw material;
performing a first calcination of the mixture at 830 to 870°C to obtain a calcinated product;
pulverizing the calcinated product to obtain a metal oxide; and
performing a second calcination of the metal oxide at 750 to 830°C to obtain lithium metal oxide particles,
wherein in the step of performing the first calcination to obtain the calcinated product, the calcinated product satisfies the following Equation 2: $1.00 \leq C - D \leq 5.00$ (In Equation 2, C is a sum of fine powder values of 1 µm or less after pressing when 3 g of a sample of the first calcinated product is introduced into a 1.3 cm diameter mold and pressed at 9 tons, and B is a sum of fine powder values of 1 µm or less before pressing.).

11. The method for manufacturing a positive electrode active material for a lithium secondary battery of claim 10, wherein the metal hydroxide precursor is a plate-shaped precursor.

12. The method for manufacturing a positive electrode active material for a lithium secondary battery of claim 10, wherein the calcinated product is pulverized using a jet mill at a pressure of 2.0 to 5.0 bar.

13. The method for manufacturing a positive electrode active material for a lithium secondary battery of claim 10, wherein the first calcination is performed at 830 to 870°C.

14. The method for manufacturing a positive electrode active material for a lithium secondary battery of claim 11, wherein a Li/Ni cation mixing degree of the calcinated product obtained in the step of performing the first calcination of the mixture at 830 to 870°C to obtain the calcinated product satisfies 1.3 to 2.1%.
